# EUROPEAN PATENT APPLICATION

(11) **EP 3 279 850 A1**
(43) Date of publication of application: **07.02.2018**
(21) Application number: 16182368.7
(22) Date of filing: 02.08.2016
(51) Int. Cl.: G06Q 30/02

(54) **SYSTEM AND METHOD FOR INTERACTIVE SHOPPING**

(71) Applicant: Advanced Digital Broadcast S.A., 1292 Geneva (CH)
(72) Inventor: Skowronski, Zbigniew, 65-119 Zielona Gora (PL)
(74) Representative: Blonski, Pawel

(57) **Abstract**

A method for interactive shopping wherein at least one item available for purchase is associated with: a particular location within a store (404); a remotely controlled, electronic device capable of assuming at one of at least two visually different states, the method being characterized in that it comprises the steps of: determining client's body measurements and recording said body measurements in a database (801); installing a client application (802) in a given client device, the client application providing an identifier of the client's mobile device and being configured to transmit a signal indicative of the location of the client's mobile device; determining (804) a client's device's location and obtaining information about products of interest in client's device's proximity that match said client's body measurements; visually distinguishing the remotely controlled, electronic device associated with a product of interest by configuring said remotely controlled, electronic device to assume a different state from the state when such product is beyond a proximity threshold or is irrelevant for the client.

## Description

### TECHNICAL FIELD

The present invention relates to a system and method for interactive shopping. In particular, the present invention relates to navigating a user within a shop by indicating, which items, placed on shelves, match a user's size and distinguishing these items by presenting special indicators as the user passes by a given shelf exhibiting said matching items.

### BACKGROUND OF THE INVENTION

Prior art defines electronic circuits (frequently called a price tag) that display prices of goods wherein said circuits typically comprise an LCD display and are positioned of a shelf near a respective item available for purchase.

It would be advantageous to develop more interactive price tags that would be conscious of clients passing by and adapt, in real time, to particular clients/customers.

### SUMMARY AND OBJECTS OF THE PRESENT INVENTION

An object of the present invention is a method for interactive shopping wherein at least one item available for purchase is associated with: a particular location within a store; a remotely controlled, electronic device capable of assuming at one of at least two visually different states, the method further comprising the steps of: determining client's body measurements and recording said body measurements in a database; installing a client application in a given client device, the client application providing an identifier of the client's mobile device and being configured to transmit a signal indicative of the location of the client's mobile device; determining a client's device's location and obtaining information about products of interest in client's device's proximity that match said client's body measurements; visually distinguishing the remotely controlled, electronic device associated with a product of interest by configuring said remotely controlled, electronic device to assume a different state from the state when such product is beyond a proximity threshold or is irrelevant for the client.

Preferably, said determining client's body measurements if effected by a 3D body scanner.

Preferably, said at least two visually different states comprise at least one of the following: (a) changing the background color of the displayed content changes; (b) flashing information displayed by the remotely controlled, electronic device; (c) displaying by the remotely controlled, electronic device a particular information related to the client's mobile device; (d) presenting visual and audible cues by the remotely controlled, electronic device.

Preferably, said products of interest are selected taking into account client's preferences with respect to at least one of the following: colors, materials, producers, requirements with respect to "sale" periods, a product being fit for a particular season.

Preferably, the step of determining a client's device's location is effected by the mobile device reporting it back to the shop's server.

Preferably, the step of determining a client's device's location is effected by the shop's infrastructure that is configured to monitor location of a client device.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for interactive shopping. Further details and features of the present invention, its nature and various advantages will become more apparent from the following detailed description of the preferred embodiments shown in a drawing, in which:
Fig. 1 presents a diagram of the system according to the present invention;
Figs. 2A-2B depict shops database records;
Fig. 3 shows a definition of a reference point of a shop;
Fig. 4 presents a record defining a given product in the shop's database;
Figs. 5A-5B define records of clients database;
Fig. 6 depicts products database offered in a given shop;
Figs. 7A-7C show a mobile device designed to interact with the system;
Fig. 8 defines top level steps of the method according to the present invention;
Fig. 9 presents a method for determining parameters of a client;
Fig. 10 shows a client application installation and a dedicated device provided by a shop;
Figs. 11A-11B depict step of the method, according to the present invention, in more details;
Figs. 12A-12B show method steps executed at the side of the shop's data server;
Figs. 13A-13C present an example of a graphical user interface of a client device; and
Figs. 14A-14B depict other examples of a graphical user interface of a client device.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

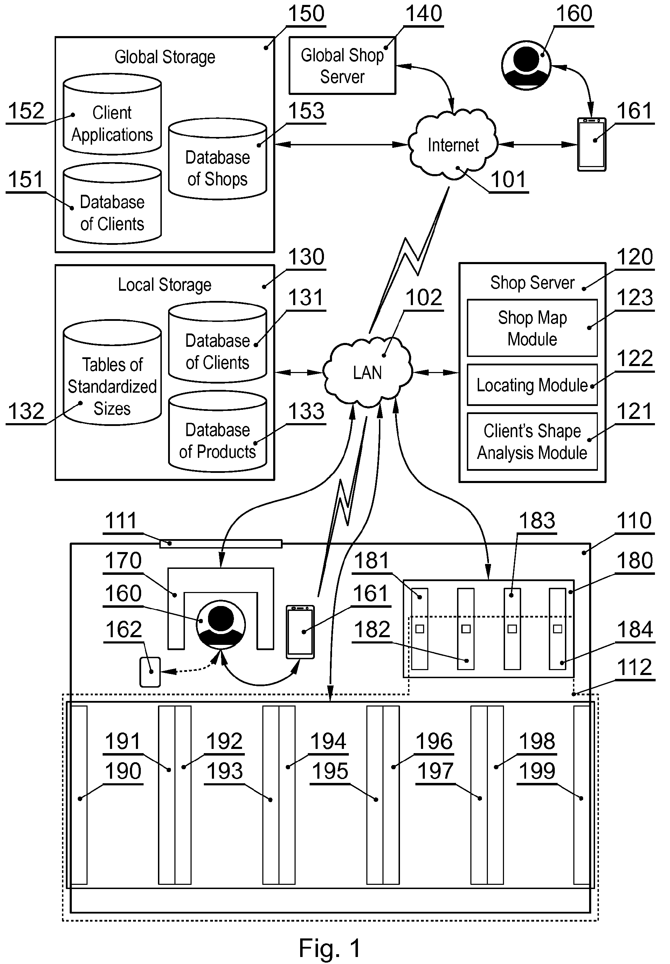

Fig. 1 presents a diagram of the system according to the present invention. There may be present a top level, Global Shop Server (140) managing a plurality of shops (153) of a given network or a plurality of networks.

By accessing the Global Shop Server (140), a client (160) may download, before a visit at a shop using the system, a software application to a client's mobile device (161). There may be available a plurality of software applications for selection (152) based on for example, mobile device's type, section of a given shop, particular shops brand etc.

Before installing such an application, a client may register in a clients' database (151) and provide personal data as well as preferences such as garment sizes or other parameters of goods the client is interested in. During said registration the client's mobile device (161) may be associated with the client so that a client in possession of said device will be automatically recognized when entering a shop using the system according to the present invention. An identifier allowing for the mobile device recognition may be a MAC address of the mobile device or any other unique identifier associated with the mobile device and known to the clients' database (151).

The Global Storage (150) data, stored at the Global Shop Server (140), may be also accessed using a local shop server (120) via a suitable communication network such as the Internet (101).

While the Global Storage (150) provides a Database of Clients (151) for a plurality of networks and shops (153), the Local Storage (130) provides the same data (Database of Clients 131) but limited to a single shop. Typically, the Global Storage (150) may operate also as a backup of a plurality of Local Storages (130). Thus, the respective data may be synchronized on a periodic basis.

The Local Storages (130) may cooperate with 3D body scanners (body scanner (170) cooperating with a Client's Shape Analysis Module (121)) that provide real body measurements, of the clients, that may be used for garment selection (such 3D body scanners are readily available on the market). This is a difference with respect to the Global Storage (150), where it is the client providing measurements data.

The data, provided by a body scanner (170), may be stored in tables of standardized sizes (132). In such tables a given range of body measurements may also be associated with a common garment size (e.g. S, L, XL) of a given garment supplier.

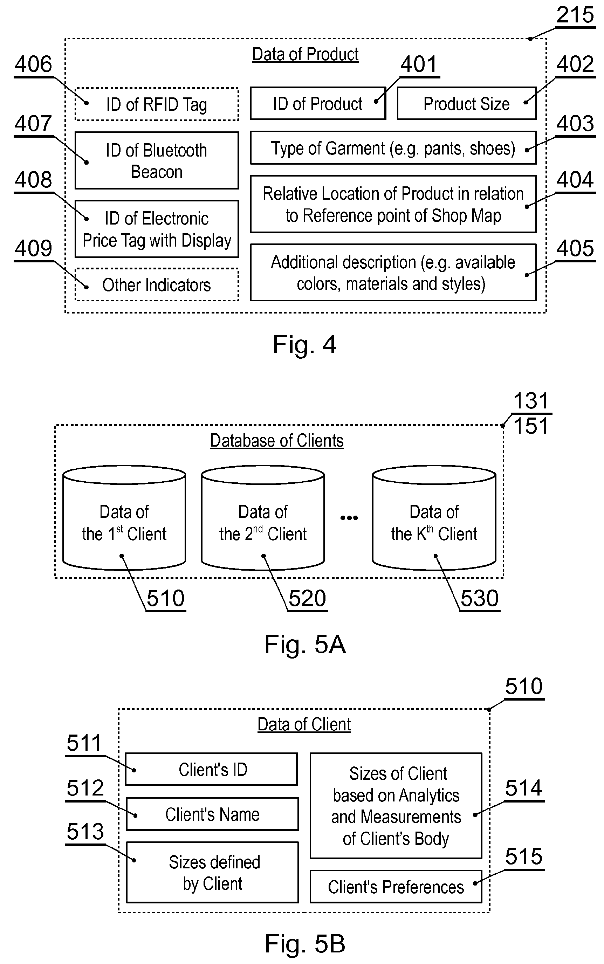

Further, the local shop server (120) manages a Database of products (133) stored in the Local Storage (130). Clearly, this database comprises data of all offered products and their associations with respective Electronic Price Tags (as shown in Fig. 4). Additionally, a Bluetooth beacon or an RFID tag or the like may be associated with a product. Such beacons or RFID tags usually have short range, which is beneficial to detect close proximity of a client to a product associated with such a beacon or tag.

In a more general definition, preferably at least one item available for purchase is associated with a remotely controlled, electronic device (i.e. an Electronic Price Tag) capable of assuming at one of at least two visually different states. Such visually different states may for example be related to displaying different colors on a display screen of the remotely controlled, electronic device. For example, when a client is further away from the remotely controlled, electronic device the displayed color may be gray (a first state of the at least two visually different states). When a first client is in proximity to the remotely controlled, electronic device the displayed color may be yellow (a second state of the at least two visually different states). While, when a second client is in proximity to the remotely controlled, electronic device the displayed color may be green (a third state of the at least two visually different states).

In addition, a first client is made aware (preferably via the client's mobile device (161)) that the yellow color is associated with products recommended for this client while the second client is made aware that the green color is associated with products recommended for this particular client.

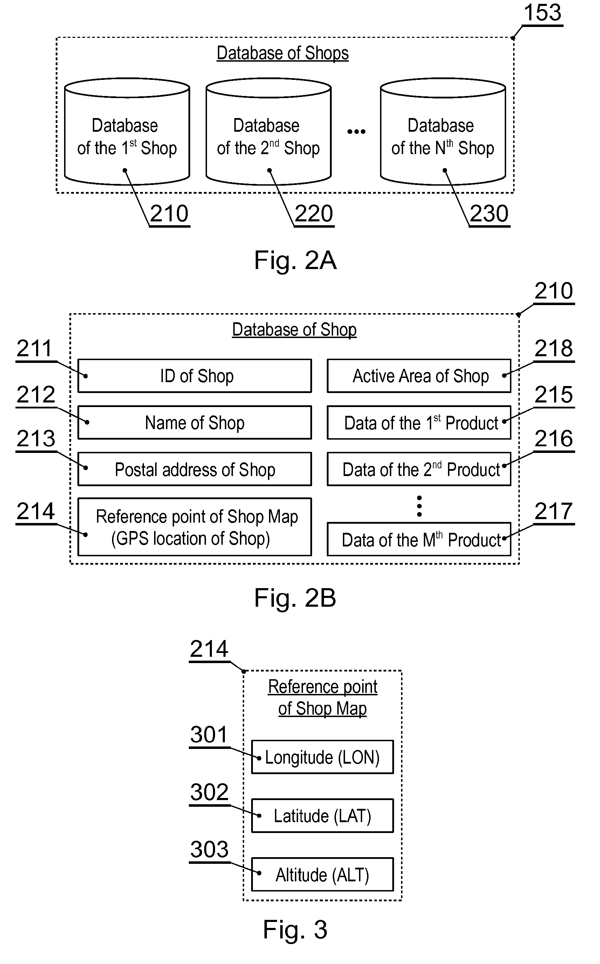

The Shop Server (120) may further comprise a Shop Map Module (123), configured for processing location data received from client's mobile device (161, 162), which may be used in order to determine client's position with respect to a Reference point of a Shop Map (214) within an Active Area of a Shop (112, 218 in Fig. 2B).

A location data of the client's mobile device (161, 162) is sent to a Products Locating Module (122) responsible for identifying products matching the clients preferences and sizes (more details to be provided with reference to Fig. 5B, items (513, 514 and 515)) that are in proximity to the client.

Data describing all available products, matching the criteria, comprise information presented with reference to Fig. 4.

All Electronic Price Tags with Display (see item 408 in Fig. 4), located on shelves (192 - 199), are communicatively connected to the Shop Server (120) so that they may be configured and managed remotely.

Each Electronic Price Tag with Display is associated with a garment of a particular kind and size. Preferably, it is configured to display a price of the garment and to display any indications for a particular client who is in proximity to the Tag. For example, such indication may be displaying said price on a selected background color, or flashing sections of the price tag or displaying an identifier associated with said client or the like (as shown in Fig. 4 item 409).

At check out (counters 181 - 184) there may be collected statistical data, whether a client has use the system according to the present invention and whether recommended items have been selected for purchase. This may be effected with for example RFID tags fixed to the garment items.

Figs. 2A-2B depict shops database (153) records. The present system may be implemented by a plurality of networks and shops (153), wherein each shop (210, 220, 230) is configured in the system (Fig. 2A).

In Fig. 2B such shop' database record comprises an identifier of a shop (211), its name (212), address (213) and a location of the shop (214). Optionally other information may be present in the database record.

Further, the database record may comprise a definition of an active area of the shop (218) and a listing of available products (215, 216, 217) as shown in more details in Fig. 4.

The active area of the shop (218) identifies typically an area comprising all products' shelves as well as counters in order to facilitate determination whether a client is within said shop. Usually, this will be a rectangular area defined with reference to a given point (e.g. a reference point as shown in Fig. 3). This is an optional feature since other means, for determining whether a client is within the shop, may be used such as detection gates or proximity detectors or cameras coupled to face recognition systems etc.

Fig. 3 shows a definition of a reference point of a shop. A typical reference definition comprising a longitude (301), latitude (302) and altitude (303) will suffice. With reference to this point there may be defined locations of respective products (Fig. 4 item (404)). This is a useful option when not all Electronic Price Tags with Display are RFID or Bluetooth Beacons.

Fig. 4 presents a record defining a given product in the shop's database. The record (215) comprises an identifier of the product (401) and information on the product's size (402), type of garment (403) as basic information as well as an additional, optional description (e.g. available colors, materials and styles) if necessary (405). Further, the record may comprise Relative Location of Product in relation to Reference point of Shop Map (404) in order to be able to determine whether a client's position is in proximity (within a given threshold) to the product (this may be done using known techniques).

Additionally, the record defining a given product in the shop's database (215), comprises an identifier of an electronic price tag associated with the product (406, 407, 408, 409) Typically the electronic tag will be an RFID tag (406) comprising a display and having a capability of being remotely configurable.

Figs. 5A-5B define records of the clients database (131). A plurality of records describing respective clients (510, 520, 530) may be stored in the database. Each record preferably comprises a client's identifier (511), name (512) and preferences (515) such as for example colors, materials, price range and the like. Further, the client's record may comprise client's data input by the client such as sizes of respective body parts (513) as well as scanned data (514) by the aforementioned 3D Body scanner.

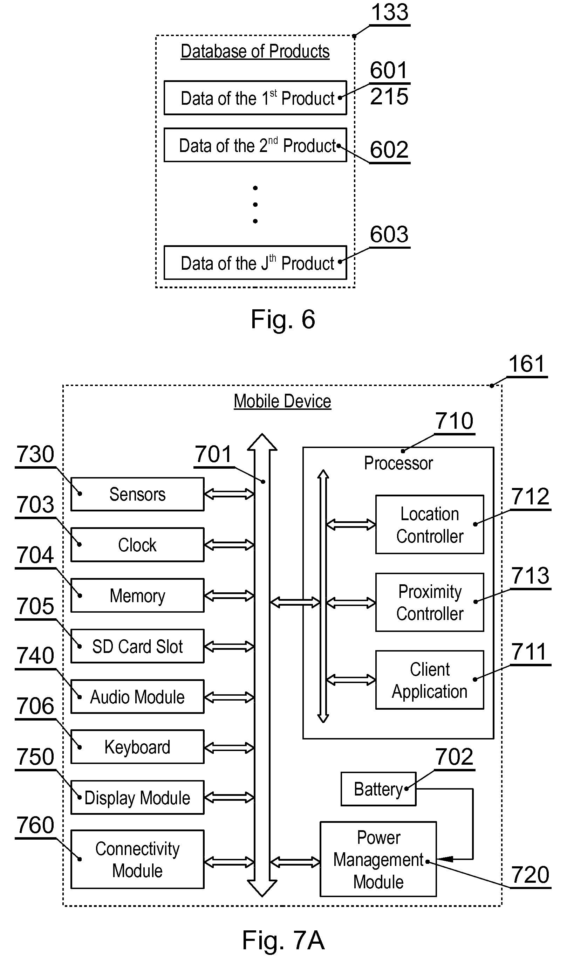

Fig. 6 depicts products database offered in a given shop. The products records (601, 602, 603) may comprise the same components as the products (215) previously described.

Figs. 7A-7C show a mobile device designed to interact with the system (161). The device (161) comprises a connectivity module (760) responsible for receiving and/or transmitting data in a wireless fashion. A signal received by the connectivity module (760) is monitored according to the present invention. Other typical modules include a memory (704) for storing data as well as software executed by the receiver, a clock module (703) configured to provide clock reference for other modules of the system, and a sensors module (730) encompassing at least one sensor such as RFID, proximity, Bluetooth LE.

Other, typical, but optional modules of the receiver are a display module (750) configured to display user interface to a user, a keyboard (706) operating as an input interface for the receiver, an audio module (740) configured to generate audible signals, an external memory slot such as an SD card slot (705) configured to receive and operate an external memory unit.

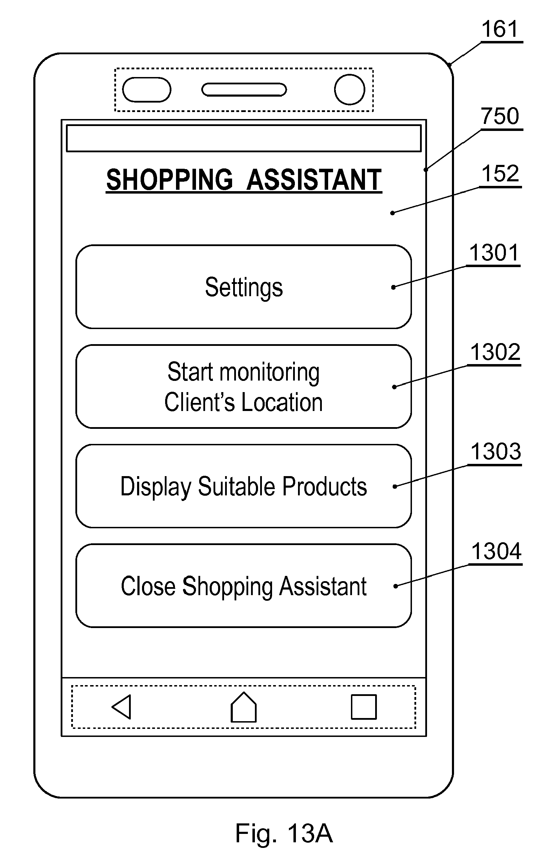

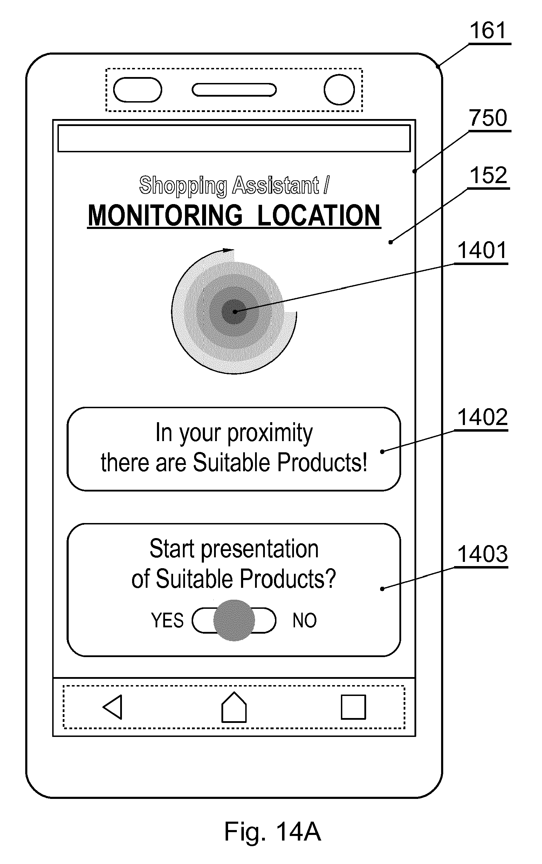

A suitable bidirectional data bus (701) may be employed in order to facilitate communication between modules and the processor (710). The processor (710) comprises a locations controller (712) responsible for monitoring location within a shop and a Proximity controller (713) responsible for establishing which products are to be distinguished from a client among other products. To this end the Proximity controller (713) is in communication with the Locating Module (122) and receives signals from beacons (407) in order to identify records of matching products (215) in proximity to the client. The process of identification may be managed by a client application (711) for which an example of graphical user interface has been shown in Figs. 13A-13C, 14A-14B.

In principle, in order to determine its location, a device will operate at least one of a GPS receiver, a short range radio waves receiver (e.g. Bluetooth beacon), an intertial navigation (using a gyroscope and an accelerometer).

A mobile device may also comprise a power management module (720) cooperating with a battery (702).

The dedicated mobile device (162), lend by a shop, should have similar modular configuration, however not all modules are mandatory as will be evident to a skilled person (for example an SD card slot is optional and hardware keyboard is also optional etc.)

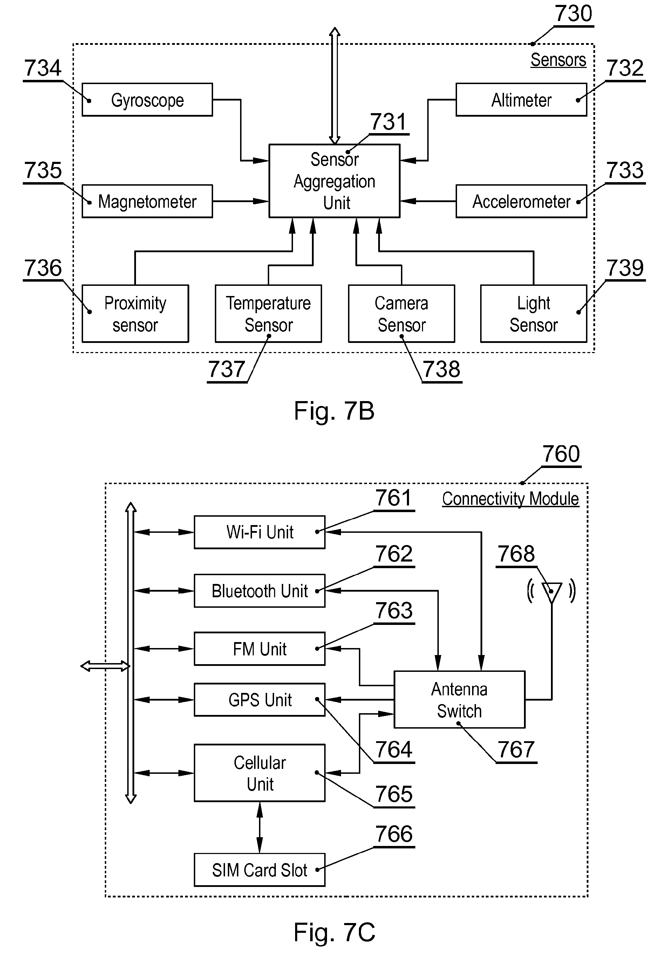

Fig. 7B presents the sensors unit (730) in more details. The management of sensors may be aggregated by a sensors aggregation unit (731), which serves as a bridge between each of the set of sensors and a client requesting data from respective sensors.

The sensors may be any one of or any subgroup of the following sensors: a proximity sensor (736), a temperature sensor (737), a light intensity sensor (739), an accelerometer (733) (enabling for example inertial navigation together with a gyroscope), an altimeter (732), a gyroscope (734), a magnetometer (735), and a camera sensor (738). The aforementioned sensors operate according to principles known in the prior art and are frequently available in smartphones, especially high-end smartphones.

Fig. 7C depicts the connectivity module (760) shown in Fig. 7A. The communication means may be any one of or any subgroup of the following: Wi-Fi (761), Bluetooth (762), FM (763), GPS (764), cellular communication unit (765) (such as GSM, 3G, 4G and similar) communicating with a SIM card slot (766), or similar. The different communication means may be managed by an antenna switch (767) connected to an antenna module (768) that may comprise one or more types of antennas.

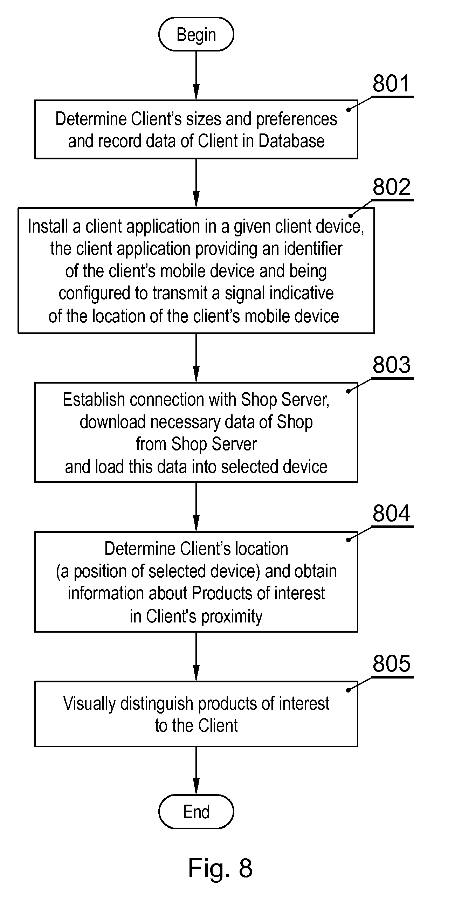

Fig. 8 defines top level steps of the method according to the present invention. The process starts from determining client's sizes (body measurements preferably together with preferences and recording the relevant data of the client in the aforementioned database (801). Next a client application is installed in a given client device and preferably data of the client (step 801) are recorded in the selected client device (802). The client application shall at least provide an identifier of the client's mobile device and be able to transmit a signal indicative of the location of the client's mobile device.

Subsequently, there is established (803) a connection with a Shop Server, in order to download necessary data of the Shop from the Shop Server and to load this data into the selected device. This step is optional since the client application may only be a simple beacon application in which an identifier of the device is broadcast using an RFID or Bluetooth or similar technique.

Next, at step (804) there is determined a client's location (a position of selected client's mobile device) and obtained information about products of interest in client's proximity. Subsequently, there are presented matching products of interest to the client (805). Such presentation may have different forms, such as for example: (a) electronic price tag of a matching product changes its behaviors, for example: the background color of the displayed content changes, the price tag information flashes or the price tag displays selected information (such as the client's name or other information related to the client's mobile device) in rotation with the price information; (b) part of the display of an electronic product tag may present a given color or an icon associated with a given mobile device and thus the client; (c) visual and audible cues may be presented by an electronic price tag.

In more general terms, step (805), is aimed at visually distinguishing the remotely controlled, electronic device associated with a product of interest (i.e. an Electronic Price Tag with Display) by configuring said remotely controlled, electronic device to assume a different state from the state when such product is beyond a proximity threshold or is irrelevant for the client.

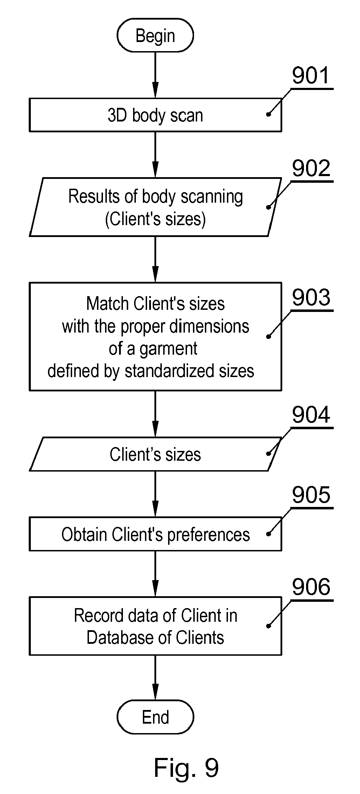

Fig. 9 presents a method for automatically determining parameters of a client. As previously mentioned, a 3D body scanner may be employed to execute a body scan (901) of a client. This scan may be processed in order to obtain physical sizes (902) of the client. Subsequently, at step (903), there are matched client's sizes with the proper dimensions of a garment defined by standardized sizes (for example head's diameter of 59 cm is treated as a Large standardized size for hats, helmets etc.). Thus client's sizes are obtained (904), which may differ per garment supplier.

At step (905) there may further be obtained client's preference with respect to for example colors, materials, producers, requirements with respect to "sale" periods, a product being fit for a particular season etc.

Lastly, at step (906), the information obtained during the previous steps is stored in a client's record in the database of clients.

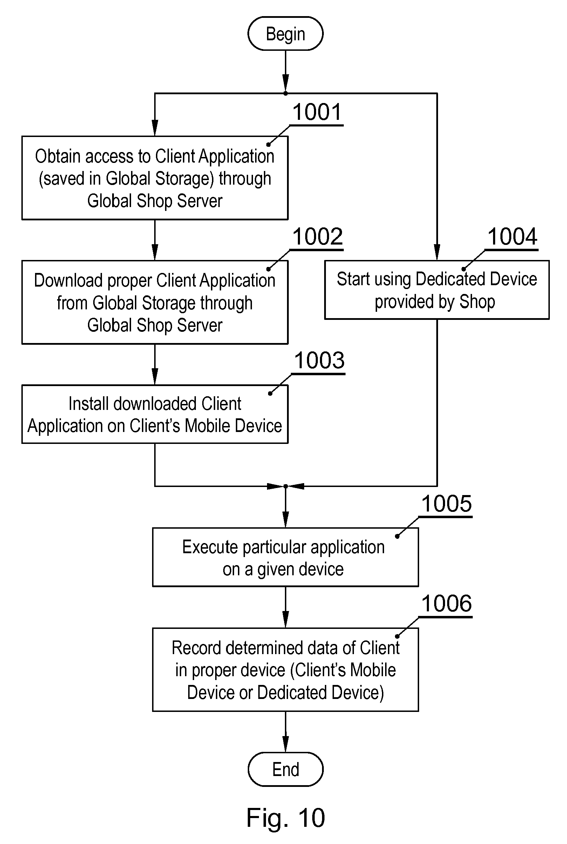

Fig. 10 shows a client's application installation (the left branch of the diagram) and a use of a dedicated device provided by a shop (the right branch of the method diagram).

In case of a client's mobile device, the device obtains access (1001) to a Client Application (saved in the Global Storage) via the Global Shop Server. Subsequently, at step (1002) there is downloaded a proper Client Application from the Global Storage via the Global Shop Server in order to install (1003) the downloaded Client Application on the Client's Mobile Device (161).

In case of a dedicated device (162) provided by a shop the client needs only to log in to an associated account and start using the device (1004). This may be done via different techniques such as inputting user name and password, scanning a fingerprint or a retina or the like.

At this time, the client is identified and at step (1005) there is executed a particular application on a given mobile device. As an option, a copy of a client's record may be stored (1006) in the proper device (Client's Mobile Device or Dedicated Device).

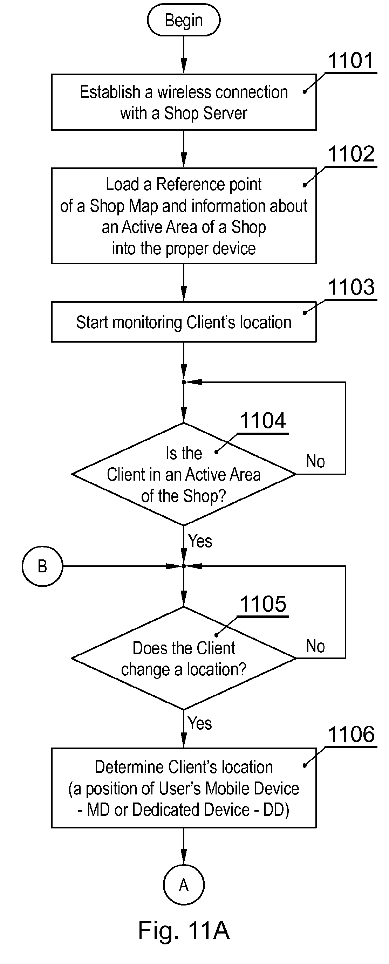

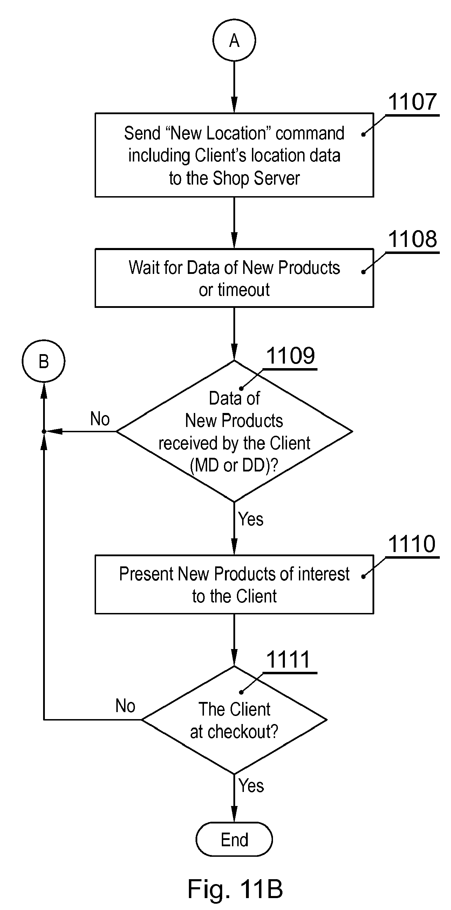

Figs. 11A-11B depict step of the method, according to the present invention, in more details. In this exemplary approach, it is the mobile device which is responsible for monitoring client's location and reporting it back to the shops server. In other approaches it may be the shop's infrastructure that is monitoring location of a client using for example detection of short range transmitter carried by the client or using video recognition systems or the like aimed at determining client's location within a shop.

These processes aim at fulfilling the main goal of the method that is determining location of the client and presenting the client with indications of proximate products meeting the requirements.

At step (1101) there is established a wireless connection with a Shop Server. Next, at step (1102), there is obtained, by the mobile device, a Reference point of the Shop Map and information about an Active Area of a Shop. Subsequently, the mobile device starts (1103) monitoring client's location.

Next, at step (1104) the system verifies whether a client is present in an Active Area of the Shop. In case there is a client, the system awaits for the client to change location (1105) and determines the client's location (a position of User's Mobile Device - MD or Dedicated Device - DD) (1106).

Subsequently, said determined location is sent (1107) "New Location" command, including client's location data, to the Shop Server and awaits for data of products or a timeout (1108).

There may be a case when the (1008) step is optional and the client's device does not display anything related to the products but instead only the electronic price tags display relevant notifications.

When the (1108) step is implemented, at step (1109) data of identified products are received by the client device (MD or DD) and are presented to the client (1110). The process is repeated for every new location of the client until checkout (1111).

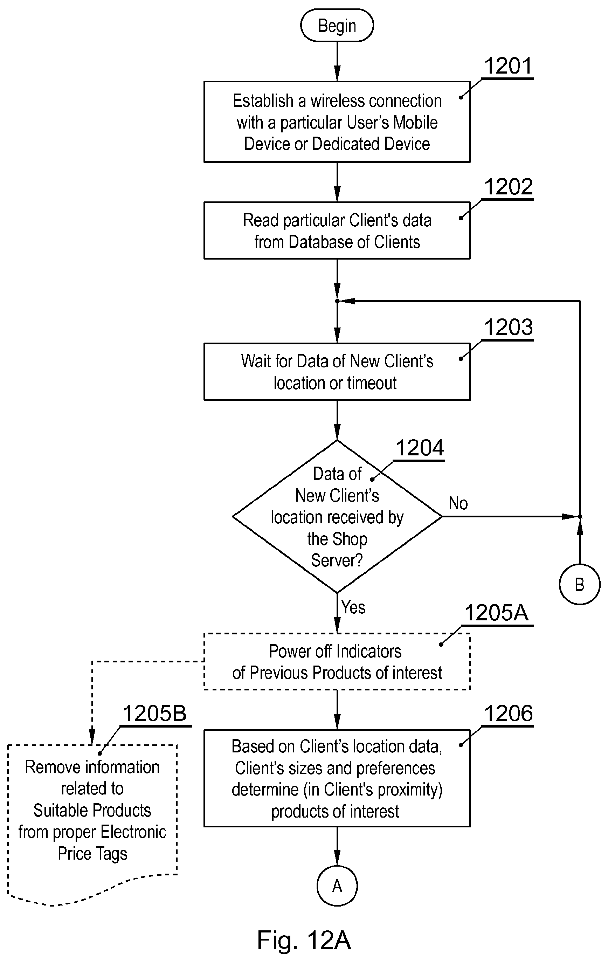

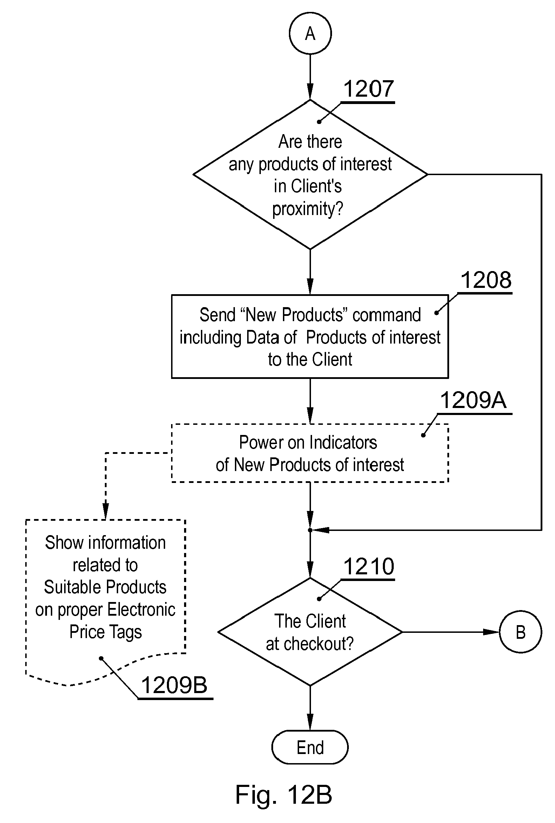

Figs. 12A-12B show method steps executed at the side of the shop's data server. At step (1201) the server establishes a wireless connection with a particular client's mobile device or dedicated device. Subsequently, (1202) there are read particular client's data from the database of clients.

Further, at step (1203), the server awaits for data representative of a new client's location (1204) or timeout. In response to receiving new location data, the server cancels indication with respect to products that are not longer in client's proximity (1205A, 1205B) and based on the client's location data, client's sizes and preferences the system determines products of interest in Client's proximity (1206).

If there are such products (1207) the server sends a "New Products" command (1208) including data of the products of interest to the client device, so that the information on the products may be presented to the client (in case a given embodiment supports that option), and switches on indications with respect to matching products that are in client's proximity (1209A, 1209B) (in case a given embodiment supports that option).

The process is repeated for every new location of the client device until checkout (1210).

Figs. 13A-13C present an example of a graphical user interface of a client device. A shopping assistant application (750) may provide options such as access to user's settings (1301), monitoring location (1302), displaying products matching client's preferences (1303).

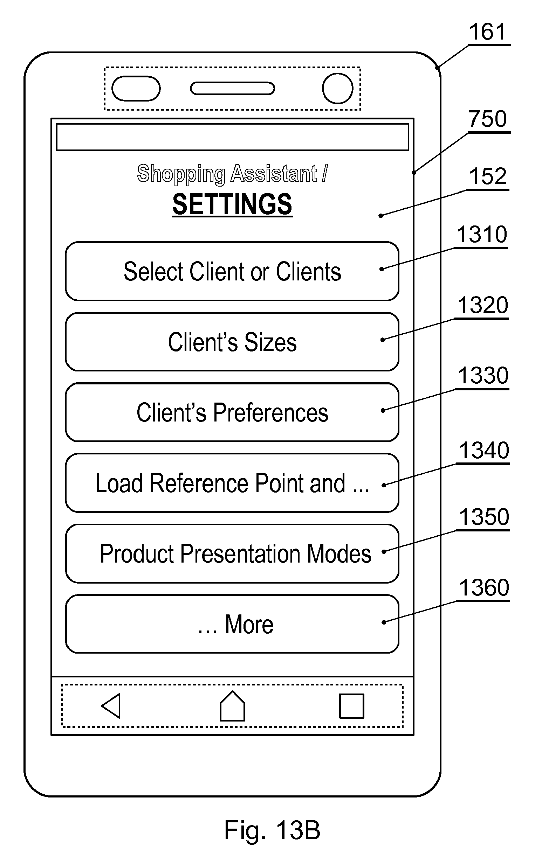

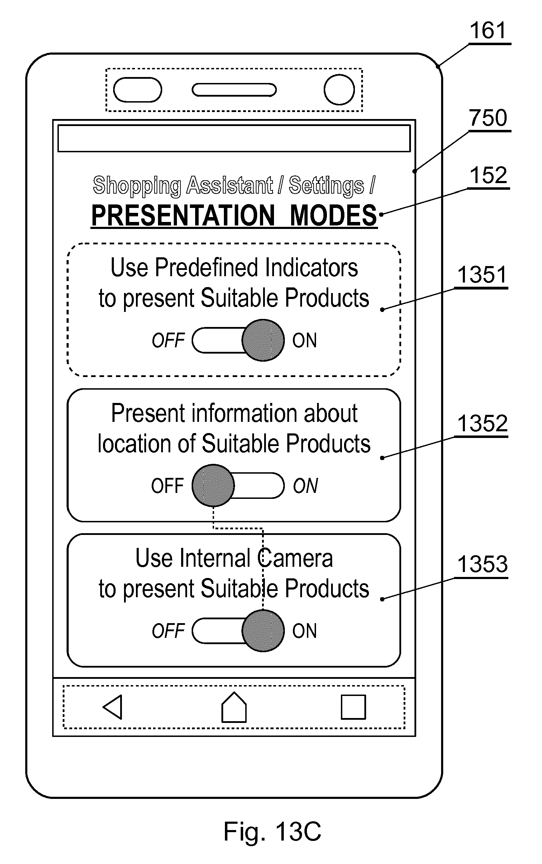

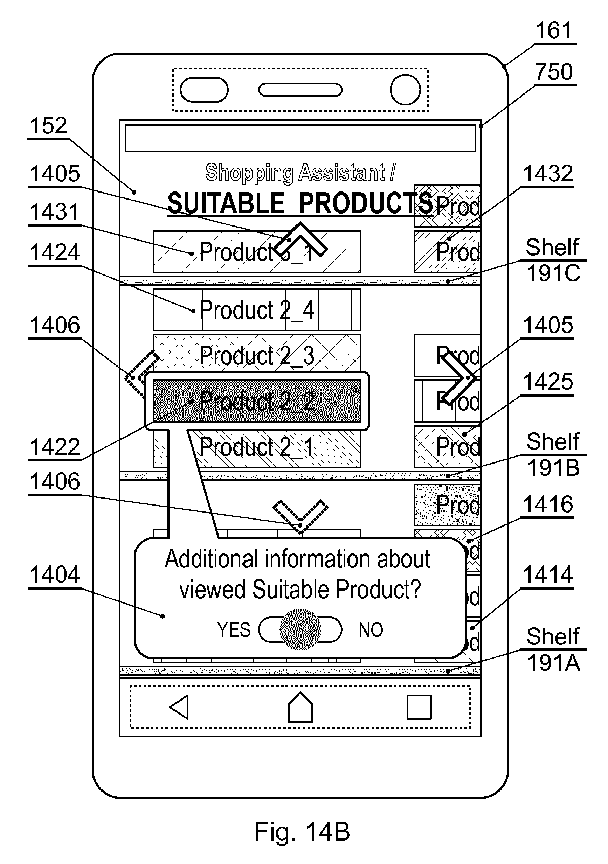

More details of the aforementioned options will be shown with reference to Figs. 13B, 13C, 14A, 14B. Clearly, more or fewer options may be available as will be evident to one skilled in the art.

The setting menu (152) may comprise the following options: client's selection (1310), preview or input of client's sizes (1320), management of client's preferences (1330), configuration of a reference point (1340) and products presentations modes (1350). In one embodiments, more than one client may be selected (1310) for example when a family is shopping together.

The presentation modes may include option (1351) related to external indicators of suitable products, such as electronic price tags displaying information for particular clients. This option may be available in case a given shop supports it.

Options (1352) and (1353) are exclusive. Information on suitable products may be presented as an info-graphic (1352), a virtual reality image, audible cues or the like. Information (1353) may use an internal camera of the client's device and present augmented reality image wherein an image of shelves is supplemented with generated graphics presenting additional information on the screen.

Fig. 14A presents an animated graphics representing location monitoring (1401) and information (1402) displayed when suitable products have been found. When this is the case their presentation may be invoked (1403).

Fig. 14B depicts a graphical user interface presenting products on respective shelves. The products (1431, 1424) may be differently presented taking into account suitability of a particular client. A product (1422) may be selected using a GUI navigation options in order to display further options such as presenting additional information (1404). Such user interface may be scrolled in different directions for example using a tilt and pan technique available in modern smartphones. In response to such scrolling, other products may be presented depending on the direction the client's device points at.

Clearly, the present invention is not only applicable to garment products. Alternatively, other kinds of products may be covered, such as sports equipment.

The present invention allows to find products of interest for a client in a given store. Therefore, the invention provides a useful, concrete and tangible result.

Further, the present invention processed products location data, products properties data, client's data as well as client's location within the store in a dedicated client-server arrangement. Thus, the machine or transformation test is fulfilled and that the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for method for interactive shopping may be performed and/or controlled by one or more computer programs. Such computer programs are typically executed by utilizing the computing resources in a computing device. Applications are stored on a non-transitory medium. An example of a non-transitory medium is a nonvolatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for interactive shopping wherein at least one item available for purchase is associated with:
• a particular location within a store (404);
• a remotely controlled, electronic device capable of assuming at one of at least two visually different states,
the method being **characterized in that** it comprises the steps of:
• determining client's body measurements and recording said body measurements in a database (801);
• installing a client application (802) in a given client device, the client application providing an identifier of the client's mobile device and being configured to transmit a signal indicative of the location of the client's mobile device;
• determining (804) a client's device's location and obtaining information about products of interest in client's device's proximity that match said client's body measurements;
• visually distinguishing the remotely controlled, electronic device associated with a product of interest by configuring said remotely controlled, electronic device to assume a different state from the state when such product is beyond a proximity threshold or is irrelevant for the client.

2. The method according to claim 1 **characterized in that** said determining client's body measurements if effected by a 3D body scanner.

3. The method according to claim 1 **characterized in that** said at least two visually different states comprise at least one of the following:
• (a) changing the background color of the displayed content changes;
• (b) flashing information displayed by the remotely controlled, electronic device;
• (c) displaying by the remotely controlled, electronic device a particular information related to the client's mobile device;
• (d) presenting visual and audible cues by the remotely controlled, electronic device.

4. The method according to claim 1 **characterized in that** said products of interest are selected taking into account client's preferences with respect to at least one of the following: colors, materials, producers, requirements with respect to "sale" periods, a product being fit for a particular season.

5. The method according to claim 1 **characterized in that** the step of determining (804) a client's device's location is effected by the mobile device reporting it back to the shop's server.

6. The method according to claim 1 **characterized in that** the step of determining (804) a client's device's location is effected by the shop's infrastructure that is configured to monitor location of a client device.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.
